# EUROPEAN PATENT SPECIFICATION

(11) **EP 2 664 564 B1**
(45) Date of publication and mention of the grant of the patent: **08.07.2015**
(21) Application number: 13164029.4
(22) Date of filing: 17.04.2013
(51) Int. Cl.: B65G 23/22, H02K 7/10

(54) **Motor drive of a gearless belt conveyor drive system**
Motorantrieb eines getriebelosen Bandförderantriebsystems
Entraînement d' un moteur d'un système d' entraînement sans engrenage d' une courroie de transport

(30) Priority: 16.05.2012 EP 12003852
(43) Date of publication of application: 20.11.2013
(73) Proprietor: ABB Technology AG, 8050 Zürich (CH)
(72) Inventor: Rathmann, Boris, 03042 Cottbus (DE); Richter, Ulf, 03048 Cottbus (DE)
(74) Representative: Kock, Ina

(56) References cited:
- EP-A1- 0 735 648
- EP-A1- 1 411 620
- CA-A1- 2 568 676
- DE-A1-102006 036 986
- DE-A1-102008 030 200
- FR-A1- 2 893 459
- US-B1- 6 661 136
- US-B1- 6 833 644

## Description

The invention relates to a motor drive for a gearless belt conveyor drive system as well as a gearless belt conveyor drive system comprising the motor drive.

In mining and other kinds of industry where large scale bulk material as well as pieces of goods need to be handled and transported over considerable distances, belt conveyor systems are used. In general, to set a conveyor belt into motion, a conveyor drive unit is required which drives a belt drive pulley. The conveyor drive unit most commonly contains an electrical motor drive which is connected to the belt drive pulley by using a reduction gear. An alternative concept is the use of a direct drive, i.e. of a slowly rotating electrical motor which is directly coupled to the drive pulley in a gearless fashion. Accordingly, a gearless belt conveyor drive system contains an electrical motor drive and a belt drive pulley which are in direct mechanical connection. Such a gearless belt conveyor drive system has the advantage that due to the elimination of the gear, less moving mechanical components are involved which increases the reliability and life time of the conveyor drive system and thereby reduces the maintenance costs.

Gearless belt conveyor drive systems have been known for some time. For example, Siemens introduced their first gearless belt conveyor drive system in the article by Schwulera, R., "Advanced Drive System Saves up to 20% Energy", in: Electric Energy Conference 1987: Adelaide, S. Aust.: An International Conference on Electric Machines and Drives; Proceedings. Barton, ACT: Institution of Engineers, Australia, 1987: 101-107. The conveyor drive system contains two synchronous motors, the rotors of which are directly flanged to each side of the pulley shaft of the drive pulley and where the stators are then mounted so that the rotor windings may rotate inside the stators.

Another concept for a gearless belt conveyor drive system is described in US 7,543,700 B2 and DE 10 2006 004 421 A1. There, the motor is a permanent magnet synchronous motor which is located inside a pulley body of the drive pulley, , also called a drum shell, where the pulley body rotates about an axis. The stator of the motor is fixed to the axis and the rotor with the permanent magnets is fixed on the inside to the pulley body so that it can rotate together with the drive pulley about the stator.

Patent document EP 1 411 620 A1 discloses an electric motor for an elevator having a stator wound on teeth. A rotor rotates around the stator and has a tubular casing and permanent magnets. A pulley links to the rotor and partly covers the heads of the stator's windings.

Patent document DE 10 2006 036986 A1 discloses a synchronous electric motor for hybrid-drive vehicle having a stator provided with at least one coil and at least one rotor for generating a magnetic exciter-field, in which the coil is arranged at least partly in the exciter-field and during action of the coil with a coil current, a torque is generated in the rotor. The stator is axially movable, so that the active conductor length of the coil located in the magnetic exciter-field of the rotor is variable.

Patent document US 6 661 136 B1 discloses an external rotor motor for a treadmill. A supporting shaft extends between mounting brackets. A coil stator is installed in the middle of the supporting shaft. Rotation seats are fitted to both sides of the coil stator by means of bearing, respectively. A belt wheel is arranged at one side of the rotation seat. An external rotor is arranged around the coil stator by means of both rotation seats.

Patent document EP 0 735 648 A1 discloses a gearless traction-type hoisting device with an electric synchronous or asynchronous motor. An axle is fixedly supported, so as not to rotate, at both ends on a carrier construction or on the ground. A drive plate is rotatable mounted on the axle and connected to the motor. The drive plate has a first region with cable grooves and a second region for engagement of brake shoes. The rotor of the electric motor is axially fastened to the side of the drive plate furthest from the braking region. The stator of the electric motor is fastened to the stationary axle.

The arrangement of the motor inside the pulley body may lead to various technical problems, especially when used for a large scale belt conveyor system, for example an overland conveyor, where the power rate of one of the corresponding driving motors reaches up to 10 Megawatt. Firstly, the pulley body limits the physical size of the motor. Accordingly, the maximum available power density of the motor limits the maximum possible power rate of the motor. This maximum power rate lies at a maximum of not more than 5 Megawatt, which may not be sufficient to drive a large scale belt conveyor system. Secondly, the problem with reliably removing the heat from the pulley body needs to be observed, where this problem aggravates with increasing power density. As an alternative to increasing the power density, one might think of increasing the size of the pulley body. However, an enlarged pulley body may require the use of a different belt size and/or belt material which considerably increases the costs of the belt conveyor system. In addition, the complexity of the manufacturing processes increases with an increased size of the pulley body, while the manufacturing precision deteriorates, in particular with respect to the evenness and roundness of the cylindrical pulley body.

It is therefore the object of the present invention to suggest a concept for the motor drive of a gearless belt conveyor drive system where the above described problems are avoided.

This object is achieved by a motor drive and a gearless belt conveyor drive system containing the motor drive according to the main claims.

The motor drive for a gearless belt conveyor drive system according to the invention comprises a motor base frame, a torque arm mounted on the motor base frame or on a conveyor baseplate, a rotationally symmetrical stator of a synchronous motor being fixedly held by the torque arm, a rotationally symmetrical rotor casing containing the permanent magnet elements of the rotor of the synchronous motor, where the rotor casing is directly mountable on a front end of a cylindrical belt conveyor pulley so that the elements of the rotor are rotary around the stator and so that the symmetry axis of the rotor casing and the symmetry axis of the stator are aligned with each other and with the longitudinal axis of the belt conveyor pulley.

Accordingly, the present invention is based on the idea to combine the two previously described concepts in such a way that the disadvantages are overcome. Therefore, the synchronous motor with permanent magnets is placed not inside the body of the belt conveyor pulley but is made to be mountable to one of its outer ends. This overcomes the above described problems with the limited motor power and with the removing of the motor heat. In contrast to the solution described by Schwulera, the rotor of the motor drive is not an inner but an outer rotor, i.e. it rotates around the stator. This concept allows for a design of the motor drive which is optimized with respect to the power rate, the electrical efficiency and the physical size and weight of the motor. The motor drive becomes lighter and slimmer, which means that it can be handled much more easily during installation, servicing and maintenance. In addition, the proposed concept for the motor drive results in an increased cost efficiency of the resulting gearless belt conveyor drive system, compared to the system with a standard synchronous motors with inner rotors, as cost savings can be achieved in other parts of the system than just the motor. Since due to the outer rotor concept the permanent magnets are subject to moderate temperatures of less than 120 degrees Celsius, no high-end permanent magnet material is required. Further advantages are that the rotor can be easily disassembled, for transporting for example, since no rotor windings and no electrical connectors are contained.

In an embodiment of the motor drive, the motor base frame is arranged to be slidable alongside a rail from an installation or servicing position to an operating position, and vice versa, and to be fixed to a conveyor baseplate or a conveyor foundation platform in the operating position. According to this embodiment, the motor base frame, together with any element or part of the motor drive which is mounted to it, can be separated from the belt conveyor pulley in order for the synchronous motor and/or the pulley to be serviced or in order to simplify the installation process. This is for example advantageous in connection with large scale belt conveyor systems which are used in underground mines, such as copper mines. The space in the tunnels of the mines is naturally limited, while the power rate and accordingly the size of the motor drive are comparatively large. When during installation, servicing or maintenance access to the rotor casing is needed, the stator can be easily separated from it without requiring much space. Therefore, only the motor base frame together with the torque arm and the stator are slided to the servicing position and the servicing can be performed directly in the tunnel.

In another embodiment, the rotor and the stator of the motor drive are mounted on a same shaft or a same non-rotating axis as the belt conveyor pulley. In this way, any impact of a possible bending in the motor base frame and/or the conveyor baseplate on the air gap between stator and rotor is avoided, in particular if the base frame or baseplate is made of steel.

In a further development of the preferred embodiment, the rotor casing is arranged to be fixedly attached directly or indirectly to the motor base frame. According to this solution, the complete motor drive can be easily separated from the pulley, so that direct access to the pulley is given which could, for example, be exchanged without requiring much preparatory effort and without the need for first disassembling the motor.

In a further embodiment of the motor drive, the rotor casing is provided with cooling elements for convection cooling. This cooling principle together with the outer rotor concept results in a robust, simple and efficient cooling of the synchronous motor, which makes the overall motor design energy- and cost efficient. Alternatively, or in addition to the cooling elements, forced cooling means can be provided for applying forced cooling to the motor drive and its rotor casing. For example, a cooling fan may be installed in proximity to the motor drive for creating forced air convection.

The gearless belt conveyor drive system according to the invention comprises a motor drive as described above, a cylindrical belt conveyor pulley which is mounted so as to be rotary around its longitudinal axis and at least one flange for fixedly connecting the belt conveyor pulley and the rotor casing of the motor drive. Altogether, the gearless belt conveyor drive system contains a comparatively small number of elements and is constructed in a simple and modular way which is mechanically robust.

In an embodiment of the gearless belt conveyor drive system, the belt conveyor pulley is rotary mounted inside at least one antifriction bearing. Since the synchronous motor is directly attached to the pulley, the motor can be designed without any bearing. This results in the possibility for a reduced air gap, which leads to an increased power rate by maintaining the physical size of the motor. Further, no bearing in the synchronous motor means less wearing of the motor.

The invention and its further embodiments will become apparent from the examples described below in connection with the appended drawings which illustrate:
- Fig. 1: a first embodiment of the gearless belt conveyor drive system in an operating state,
- Fig. 2: a servicing state of the first embodiment,
- Fig. 3: a second embodiment of the gearless belt conveyor drive system,
- Fig. 4: a third embodiment of the gearless belt conveyor drive system,
- Fig. 5: a fourth embodiment of the gearless belt conveyor drive system.

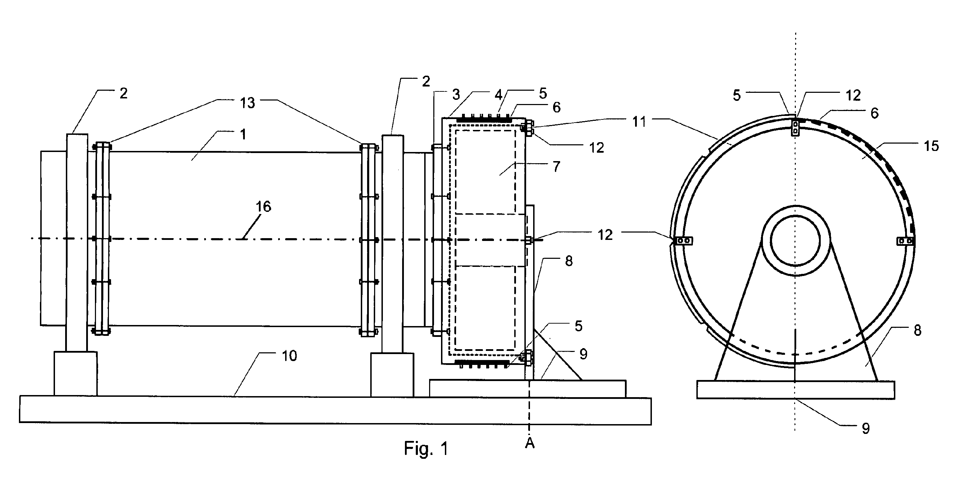

In Fig. 1, a first embodiment of a gearless belt conveyor drive system is depicted containing a cylindrical belt conveyor pulley 1 for driving a conveyor belt. The belt conveyor pulley 1 is mounted inside two antifriction bearings 2 so that it is rotary around its longitudinal axis 16. The belt conveyor pulley 1 contains two flanges 13 located on inner sides of the antifriction bearings 2, where the inner sides are the sides of flanges 13 which show towards the belt driving part of belt conveyor pulley 1. On an outer side of one of the antifriction bearings 2, belt conveyor pulley 1 ends in a further flange 3, which used for fixedly connecting a rotor casing 4 to the further flange 3 and thereby to the belt conveyor pulley 1.

The rotor casing 4 contains permanent magnet elements 6, which basically form a rotationally symmetrical rotor of a synchronous motor. On the outside of the rotor casing 4, cooling elements 5 are attached to the casing for convection cooling. The permanent magnet elements 6 of the rotor are arranged to be rotary around a rotationally symmetrical stator 7, where the symmetry axis of the rotor casing 4 and the symmetry axis of the stator 7 are aligned with each other and with the longitudinal axis 16 of the belt conveyor pulley 1.

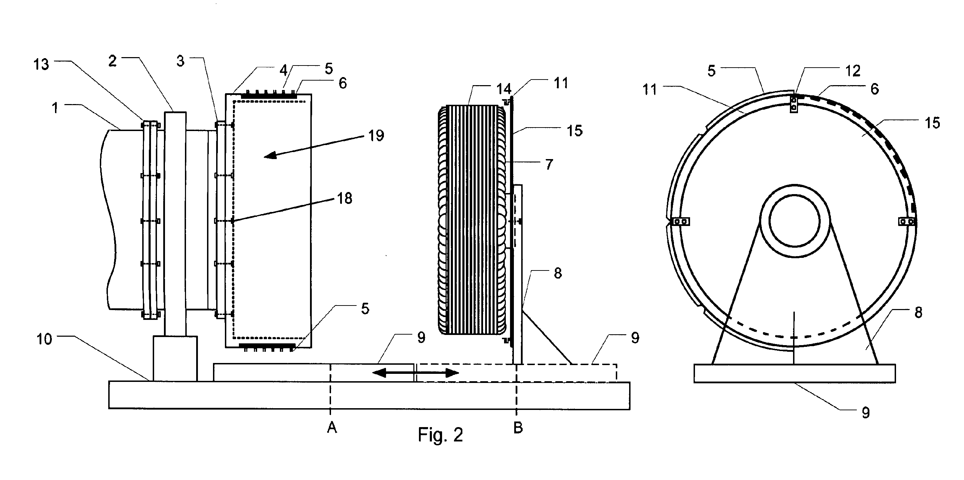

The stator 7 is fixedly held by a torque arm 8, where the torque arm 8 absorbs reaction forces or torques resulting from the rotational movement of the rotor, and the torque arm 8 is mounted on a motor base frame 9. The motor base frame 9 is arranged to be slidable alongside a rail from an operating position A to a servicing position B (see Fig. 2) and vice versa and to be fixed in the operating position A to a conveyor baseplate 10, also called a conveyor foundation platform 10. The conveyor baseplate 10 can for example be made of steel or concrete. In cases where the conveyor baseplate or foundation platform is made of concrete, the gearless belt conveyor drive system belongs to a permanent installation. But the conveyor baseplate or foundation platform may also be designed for the gearless belt conveyor drive system to be a mobile conveyor drive system which can be relocated.

As can be seen in Fig. 2, by sliding the motor base frame 9 to servicing position B, the stator 7 is moved as well, together with the torque arm 8. Rotor casing 4 has an open front end showing away from the belt conveyor pulley 1. In the operating position A, the stator 7 is placed such it extends through the open front end into the rotor casing 4. When being slided into the servicing position B, the stator 7 is moved out of the rotor casing 4 through the open front end. In Fig. 2, a cover plate 15 is shown, which in the operating position A covers the open front end of rotor casing 4. This cover plate 15 is fixed to torque arm 8 as well. A circular labyrinth seal 11 is arranged concentrically at and attached to the cover plate 15. In operating position A, the labyrinth seal 11 seals the inner room 19 of the rotor casing 4 against dust and/or humidity.

In servicing position B, the various elements of the rotor and stator of the synchronous motor can be easily reached. In case that the belt conveyor pulley 1 requires maintenance, rotor casing 4 can be detached from the belt conveyor pulley 1 by unfastening the bolted connections 18 which extend through the further flange 3. This situation may for example be applicable when the gearless belt conveyor drive system is used outside of mining tunnels, for example between the mine and a bulk storage depot, since no space restrictions need to be observed.

Another possibility for easily reaching the belt conveyor pulley 1 during servicing, and in particular within a limited space, such as in a mining tunnel, is to use at least one bolted connection 12 for mounting the rotor casing 4 to the cover plate 15 and/or to the torque arm 8, as is indicated in Fig. 1. Of course, bolted connections 18 need to be removed as well. In that case, rotor and stator can be moved together to servicing position B and belt conveyor pulley 1 becomes directly accessible.

In Figs. 1 and 2, the belt conveyor pulley is a hollow cylinder comprising two cylinder bearing sections, each placed inside one of the antifriction bearings 2. One of the two cylinder bearing sections ends directly in the outer flanges 13 and 3. Accordingly, the cylinder body takes over two mechanical tasks: the one of driving the conveyor belt and the one of transmitting the driving torque of the synchronous motor. In general, it is advantageous to use a hollow cylinder for the belt conveyor pulley which itself then functions as a shaft, since the belt conveyor pulley then has an increased stiffness with respect to belt tensile forces. As a result, the belt conveyor pulley bends less compared to a standard shaft onto which a pulley is mounted. This reduces the overall distortions in the conveyor drive system and helps to keep the air gap in the synchronous motor at a constant level, even allowing for a further reduction of the air gap.

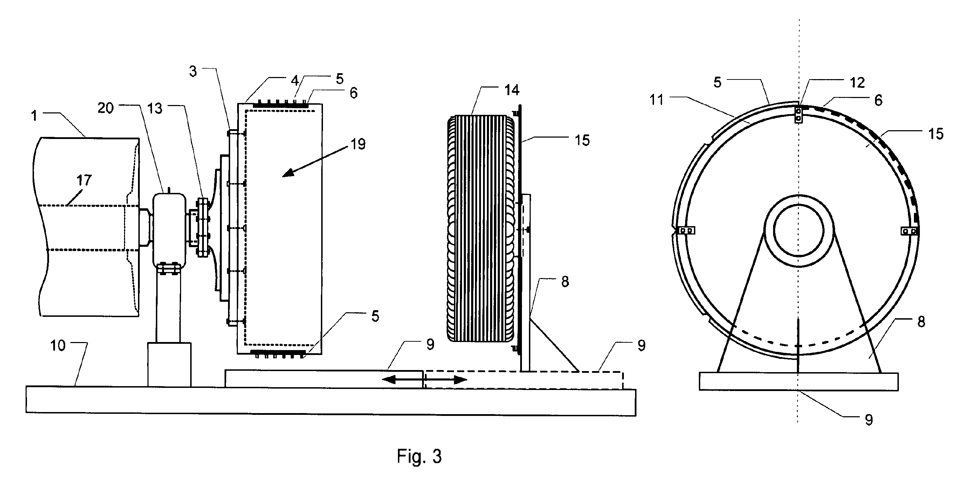

In Fig. 3, a second embodiment of a gearless belt conveyor drive system is shown, which differs from the system of Figs. 1 and 2 in that the belt conveyor pulley contains a shaft 17, one end of which is connected to the flanges 13 and 3 to which the rotor casing 4 is attached. In this embodiment, driving torque of the synchronous motor is transmitted through the shaft, while the cylinder body of belt conveyor pulley 1 solely drives the conveyor belt. A further difference is that both flanges 13 and 3 are located on the outer side of an antifriction bearing 20, in particular a roller bearing, with the inner side of the antifriction bearing 20 facing a front side of the cylindrical belt conveyor pulley 1.

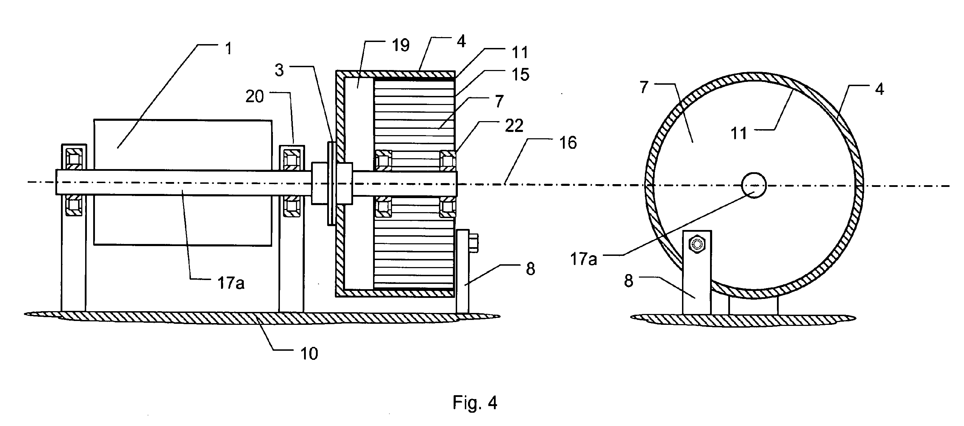

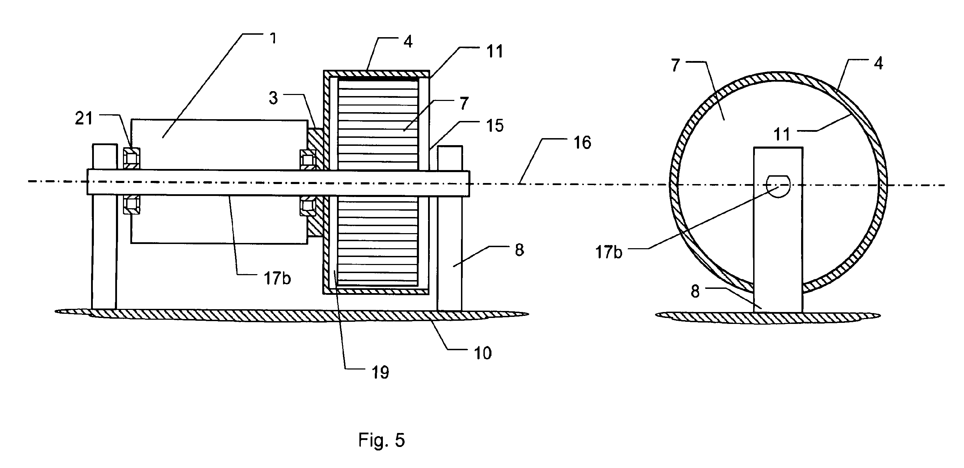

A third and a fourth embodiment are shown of a gearless belt conveyor drive system are shown in Figs. 4 and 5, respectively. These two variants have in common that in contrast to the first and second embodiments, the stator 7 and the rotor, comprising again the rotor casing 4 and the permanent magnet elements 6, are both mounted on the same shaft 17a (Fig. 4) or on the same non-rotating axis 17b (Fig. 5) as the belt conveyor pulley 1. Opposed to that, the rotor and stator of the first and the second embodiments, i.e. the motor drive for driving the belt conveyor pulley 1, is arranged on a shaft of its own.

By mounting the stator and rotor on the same shaft or axis as the belt conveyor pulley, any impact of a possible bending in the conveyor baseplate 10 on the air gap between stator and rotor is avoided, in particular if the baseplate is made of steel.

As can be seen from Figs. 4 and 5, antifriction bearings 20, 21, 22, in particular roller bearings, are used either for the stator 7 and to support the shaft 17a in case of the common shaft 17a, or for the belt conveyor pulley 1 and the rotor casing 4 in case of the common axis 17b.

With regard to installation and servicing, the third and fourth embodiments do not allow for the stator 7 to be separated easily from the rotor casing 4. Instead, the frame of the whole motor drive, including rotor and stator, is to be separated from the belt conveyor pulley 1. For servicing purposes, the motor frame may then be moved into the servicing position by using a crane or by using a movable platform to be placed underneath the motor frame.

## Claims

1. Gearless belt conveyor drive system comprising
• a motor drive with
• a motor base frame (9),
• a torque arm (8) mounted on the motor base frame (9) or a conveyor baseplate (10),
• a rotationally symmetrical stator (7, 14) of a synchronous motor being fixedly held by the torque arm (8),
• a rotationally symmetrical rotor casing (4) containing permanent magnet elements (6) of the rotor of the synchronous motor, where the rotor casing (4) is directly mountable on a front end of a cylindrical belt conveyor pulley (1) so that the permanent magnet elements (6) of the rotor are rotary around the stator (7) and so that the symmetry axis of the rotor casing (4) and the symmetry axis of the stator are aligned with each other and with the longitudinal axis (16) of the belt conveyor pulley (1),
• a cylindrical belt conveyor pulley (1) which is mounted so as to be rotary around its longitudinal axis (16),
• at least one flange (3, 13) for fixedly connecting the belt conveyor pulley and the rotor casing (4) of the motor drive,
• wherein the motor drive is placed not inside the body of the belt conveyor pulley,
***characterized in that***
*the motor base frame (9) is arranged to be slidable alongside a rail from an operating position (A) to a servicing position (B) and to be fixed to the conveyor baseplate (10) in the operating position (A).*

2. Gearless belt conveyor drive system according to claim 1, where the rotor (4, 6) and the stator (7, 14) are mounted on a same shaft (17a) or a same non-rotating axis (17b) as the belt conveyor pulley (1).

3. Gearless belt conveyor drive system according to any of the previous claims, where the rotor casing (4) has an open front end, where the open front end shows away from the belt conveyor pulley (1) and where the rotor casing (4) is mounted so that the stator (7) extends through the open front end into the rotor casing (4).

4. Gearless belt conveyor drive system according to claim 3, where a cover plate (15) covers the open front end of the rotor casing (4) and where a labyrinth seal (11) is located at and attached to the cover plate (15) for sealing an inner room (19) of the rotor casing (4) against dust and/or humidity.

5. Gearless belt conveyor drive system according to claim 4, where for servicing purposes at least one bolted connection (12) attaches the rotor casing (4) to the cover plate (15) and/or to the torque arm (8).

6. Gearless belt conveyor drive system according to any of the previous claims, where the front end of the rotor casing (4) which is directly mountable to the belt conveyor pulley (1) is arranged in the form of a flange end.

7. Gearless belt conveyor drive system according to any of the previous claims, where the rotor casing (4) is provided with cooling elements (5) for convection cooling and/or is arranged to be cooled by forced cooling means.

8. Gearless belt conveyor drive system according to any of the previous claims, where the belt conveyor pulley (1) is a hollow shaft or mounted fixedly on a shaft (17, 17a) with the shaft being supported by means of at least one antifriction bearing (2, 20).

9. Gearless belt conveyor drive system according to any of the claims 1 to 7, where the belt conveyor pulley (1) is mounted rotary on a non-rotating axis (17b) by means of at least one antifriction bearing (21).

10. Gearless belt conveyor drive system according to any of the previous claims, where the belt conveyor pulley (1) is a hollow cylinder, the cylinder body of which directly ends in the at least one flange (13).

11. Gearless belt conveyor drive system according to claim 8, where one end of the shaft (17) is connected to the at least one flange (13).

12. Gearless belt conveyor drive system according to claim 9, where the at least one flange (3) is mounted to or part of the rotor casing (4).

## Patentansprüche

1. Getriebeloses Bandförderantriebssystem, das Folgendes umfasst:
· einen Motorantrieb mit
· einem Motorgrundrahmen (9),
· einem Drehmomentarm (8), der am Motorgrundrahmen (9) oder an einer Förderbandgrundplatte (10) montiert ist,
· einem rotationssymmetrischen Stator (7, 14) eines Synchronmotors, der fest vom Drehmomentarm (8) gehalten wird,
· einem rotationssymmetrischen Rotorgehäuse (4), das Dauermagnetelemente (6) des Rotors des Synchronmotors enthält, wobei das Rotorgehäuse (4) direkt an einem Frontende einer zylindrischen Förderrolle (1) montierbar ist, so dass sich die Dauermagnetelemente (6) des Rotors um den Stator (7) drehen können und die Symmetrieachse des Rotorgehäuses (4) und die Symmetrieachse des Stators zueinander und zur Längsachse (16) der Förderrolle (1) ausgerichtet sind,
· eine zylindrische Förderrolle (1), die so montiert ist, dass sie sich um ihre Längsachse (16) drehen kann,
· mindestens einen Flansch (3, 13), um die Förderrolle und das Rotorgehäuse (4) des Motorantriebs fest zu verbinden,
· wobei der Motorantrieb nicht im Inneren des Körpers der Förderrolle platziert ist,
**dadurch gekennzeichnet, dass**
der Motorgrundrahmen (9) so angeordnet ist, dass er längs einer Schiene von einer Betriebsposition (A) hin zu einer Wartungsposition (B) gleitend bewegbar und in der Betriebsposition (A) an der Förderbandgrundplatte (10) fixiert ist.

2. Getriebeloses Bandförderantriebssystem nach Anspruch 1, wobei der Rotor (4, 6) und der Stator (7, 14) auf einer selben Welle (17a) oder einer selben nichtrotierenden Achse (17b) wie die Fördertrommel (1) montiert sind.

3. Getriebeloses Bandförderantriebssystem nach einem der vorstehend aufgeführten Ansprüche, wobei das Rotorgehäuse (4) ein offenes Frontende hat, wobei das offene Frontende von der Fördertrommel (1) abgewandt und das Rotorgehäuse (4) so montiert ist, dass sich der Stator (7) durch das offene Frontende hinein in das Rotorgehäuse (4) erstreckt.

4. Getriebeloses Bandförderantriebssystem nach Anspruch 3, wobei eine Abdeckplatte (15) das offene Frontende des Rotorgehäuses (4) abdeckt und sich eine Labyrinthdichtung (11) an der Abdeckplatte (15) befindet und daran befestigt ist, um einen Innenraum (19) des Rotorgehäuses (4) gegen Staub und/oder Feuchtigkeit abzudichten.

5. Getriebeloses Bandförderantriebssystem nach Anspruch 4, wobei das Rotorgehäuse (4) zu Wartungszwecken durch mindestens eine Schraubverbindung (12) an der Abdeckplatte (15) und/oder dem Drehmomentarm (8) befestigt ist.

6. Getriebeloses Bandförderantriebssystem nach einem der vorstehend aufgeführten Ansprüche, wobei das Frontende der Förderrolle (1), auf der das Rotorgehäuse (4) direkt montierbar ist, in der Form eines Flanschendes angeordnet ist.

7. Getriebeloses Bandförderantriebssystem nach einem der vorstehend aufgeführten Ansprüche, wobei das Rotorgehäuse (4) mit Kühlelementen (5) zur Konvektionskühlung ausgestattet und/oder zur Kühlung durch Zwangskühlmittel vorgesehen ist.

8. Getriebeloses Bandförderantriebssystem nach einem der vorstehend aufgeführten Ansprüche, wobei die Förderrolle (1) eine Hohlwelle oder fest an einer Welle (17, 17a) montiert ist, wobei die Welle mittels mindestens eines Wälzlagers (2, 20) abgestützt ist.

9. Getriebeloses Bandförderantriebssystem nach einem der Ansprüche 1 bis 7, wobei die Förderrolle (1) mittels mindestens eines Wälzlagers (21) drehbar auf einer nichtrotierenden Achse (17b) montiert ist.

10. Getriebeloses Bandförderantriebssystem nach einem der vorstehend aufgeführten Ansprüche, wobei die Förderrolle (1) ein Hohlzylinder ist, dessen Zylinderkörper direkt in dem mindestens einen Flansch (13) endet.

11. Getriebeloses Bandförderantriebssystem nach Anspruch 8, wobei ein Ende der Welle (17) mit dem mindestens einen Flansch (13) verbunden ist.

12. Getriebeloses Bandförderantriebssystem nach Anspruch 9, wobei der mindestens eine Flansch (3) am Rotorgehäuse (4) montiert oder ein Teil davon ist.

## Revendications

1. Système d'entraînement de transporteur à courroie sans engrenage comprenant :
- un mécanisme d'entraînement de moteur comportant :
- un châssis de moteur (9),
- un bras de couple (8) installé sur le châssis de moteur (9) ou sur une plaque d'assise (10) du transporteur,
- un stator (7, 14) à symétrie de rotation d'un moteur synchrone maintenu de manière fixe par le bras de couple (8),
- un carter formant rotor (4) à symétrie de rotation contenant des éléments formant aimants permanents (6) du rotor du moteur synchrone, le carter formant rotor (4) pouvant être installé directement sur une extrémité avant d'une poulie de transporteur à courroie (1) cylindrique de telle sorte que les éléments formant aimants permanents (6) du rotor soient rotatifs autour du stator (7) et de telle sorte que l'axe de symétrie du carter formant rotor (4) et l'axe de symétrie du stator soient alignés l'un avec l'autre et avec l'axe longitudinal (16) de la poulie de transporteur à courroie (1),
- une poulie de transporteur à courroie (1) cylindrique qui est installée de façon à être rotative autour de son axe longitudinal (16),
- au moins une joue (3, 13) servant à raccorder de manière fixe la poulie de transporteur à courroie et le carter formant rotor (4) du mécanisme d'entraînement de moteur,
- le mécanisme d'entraînement de moteur n'étant pas placé à l'intérieur du corps de la poulie de transporteur à courroie,
**caractérisé en ce que**
le châssis de moteur (9) est conçu pour pouvoir coulisser le long d'une glissière d'une position de fonctionnement (A) à une position d'entretien (B) et pour être fixé à la plaque d'assise (10) du transporteur dans la position de fonctionnement (A).

2. Système d'entraînement de transporteur à courroie sans engrenage selon la revendication 1, dans lequel le rotor (4, 6) et le stator (7, 14) sont installés sur un même arbre (17a) ou sur un même axe non rotatif (17b) que la poulie de transporteur à courroie (1).

3. Système d'entraînement de transporteur à courroie sans engrenage selon l'une quelconque des revendications précédentes, dans lequel le carter formant rotor (4) comporte une extrémité avant ouverte, l'extrémité avant ouverte étant orientée dans la direction s'éloignant de la poulie de transporteur à courroie (1) et le carter formant rotor (4) étant installé de façon à ce que le stator (7) s'étende à travers l'extrémité avant ouverte dans le carter formant rotor (4).

4. Système d'entraînement de transporteur à courroie sans engrenage selon la revendication 3, dans lequel un couvercle (15) recouvre l'extrémité avant ouverte du carter formant rotor (4) et un joint à labyrinthe (11) est situé au niveau du couvercle (15) et attaché à celui-ci afin d'isoler un compartiment intérieur (19) du carter formant rotor (4) contre la poussière et/ou l'humidité.

5. Système d'entraînement de transporteur à courroie sans engrenage selon la revendication 4, dans lequel, à des fins d'entretien, au moins une liaison boulonnée (12) attache le carter formant rotor (4) au couvercle (15) et/ou au bras de couple (8).

6. Système d'entraînement de transporteur à courroie sans engrenage selon l'une quelconque des revendications précédentes, dans lequel l'extrémité avant de la poulie de transporteur à courroie (1) sur laquelle le carter formant rotor (4) peut être installé directement est réalisée sous la forme d'une extrémité formant joue.

7. Système d'entraînement de transporteur à courroie sans engrenage selon l'une quelconque des revendications précédentes, dans lequel le carter formant rotor (4) est doté d'éléments de refroidissement (5) en vue d'un refroidissement par convection et/ou est conçu pour être refroidi par des moyens de refroidissement forcé.

8. Système d'entraînement de transporteur à courroie sans engrenage selon l'une quelconque des revendications précédentes, dans lequel la poulie de transporteur à courroie (1) est un arbre creux ou est installée de manière fixe sur un arbre (17, 17a), l'arbre étant supporté au moyen d'au moins un palier à roulement (2, 20).

9. Système d'entraînement de transporteur à courroie sans engrenage selon l'une quelconque des revendications 1 à 7, dans lequel la poulie de transporteur à courroie (1) est installée à rotation sur un axe non rotatif (17b) au moyen d'au moins un palier à roulement (21).

10. Système d'entraînement de transporteur à courroie sans engrenage selon l'une quelconque des revendications précédentes, dans lequel la poulie de transporteur à courroie (1) est un cylindre creux, dont le corps de cylindre se termine directement dans la ou les joues (13).

11. Système d'entraînement de transporteur à courroie sans engrenage selon la revendication 8, dans lequel une extrémité de l'arbre (17) est raccordée à la ou aux joues (13).

12. Système d'entraînement de transporteur à courroie sans engrenage selon la revendication 9, dans lequel la ou les joues (3) sont installées sur le carter formant rotor (4) ou font partie de celui-ci.
